## Europäisches Patentamt
## European Patent Office
## Office européen des brevets

(19)

(11) Veröffentlichungsnummer: **0 124 475**
A2

(12) # EUROPÄISCHE PATENTANMELDUNG

(21) Anmeldenummer: **84810103.6**

(22) Anmeldetag: **01.03.84**

(51) Int. Cl.³: **G 01 B 7/04**

(30) Priorität: **29.03.83 CH 1737/83**

(43) Veröffentlichungstag der Anmeldung: **07.11.84**
**Patentblatt 84/45**

(84) Benannte Vertragsstaaten: **BE DE FR IT SE**

(71) Anmelder: **GEBRUEDER LOEPFE AG, Kastellstrasse 10, CH-8623 Wetzikon (CH)**

(72) Erfinder: **Stutz, Hansruedi, Sonnenrain 6, CH-8305 Dietlikon (CH)**
Erfinder: **Coi, Beat de, Kreuzackerstrasse 32, CH-8623 Wetzikon (CH)**

(74) Vertreter: **Travnicek, Richard, c/o GEBRUEDER LOEPFE AG Kastellstrasse 10, CH-8623 Wetzikon (CH)**

(54) **Längenmessvorrichtung für einen Faden.**

(57) Eine Längenmessvorrichtung für fadenartige Gebilde, insbesondere Textilfäden, welche auf einer Kreuzspule aufgewickelt werden, weist zufolge der exakteren Berücksichtigung der geometrischen und kinematischen Verhältnisse an Spulmaschinen eine wesentlich höhere Genauigkeit auf als bisher übliche Längenmessvorrichtungen. Insbesondere kann der Schlupf zwischen der Kreuzspule und der Nutentrommel bei der Längenbestimmung mitberücksichtigt werden.

EP 0 124 475 A2

00124475

## Beschreibung

Die Erfindung bezieht sich auf eine Längenmessvorrichtung für einen auf einer Kreuzspule aufgespulten Faden, insbesondere Textilfaden, wobei von einer Messeinrichtung an der Kreuzspule der Durchmesser mit einem Durchmesser-Sensor und jede Umdrehung mit einem Drehzahl-Sensor abgetastet wird.

Bei einer bekannten Längenmessvorrichtung (DE 31 43 451) ist der schwenkbare Spulenträger über ein mechanisches Getriebe oder dergleichen mit einer Anzeigeeinrichtung verbunden. Die jeweilige Stellung eines Anzeigegliedes der Anzeigeeinrichtung wird durch optoelektronische Sensoren abgetastet, und die Signale in einer elektronischen Schaltung werden digital verarbeitet. Ein induktiv arbeitender Drehzahlsensor gibt bei jeder Umdrehung des Garnwickels einen Impuls an die elektronische Schaltung. Aus den ihr zugeführten Signalen der genannten Sensoren wird die Länge des bei jeder einzelnen Umdrehung aufgewickelten Garns bestimmt und die Gesamtlänge des insgesamt aufgespulten Garns durch Summierung ermittelt. Beim Erreichen einer vorbestimmten Länge des aufgewickelten Garns wird der Spulvorgang unterbrochen. Die volle Spule wird durch eine leere Hülse ersetzt und ein neuer Spulvorgang gestartet.

Aufgabe der Erfindung ist die Schaffung einer Längenmessvorrichtung, welche gegenüber den bekannten Geräten eine höhere Genauigkeit der Fadenlänge gewährleistet.

Diese Aufgabe wird erfindungsgemäss gelöst durch den kennzeichnenden Teil des Anspruchs 1.

Insbesondere kann die Messvorrichtung die Merkmale der Ansprüche 2 - 18 aufweisen. Weitere Einzelheiten und Merkmale der Erfindung ergeben sich aus der Beschreibung von beispielsweisen Ausführungsformen anhand der Zeichnung. In

00124475

dieser zeigt

Fig. 1a    eine Skizze der geometrischen Zusammenhänge bei einer ersten Variante einer Längenmessvorrichtung,

Fig. 1b    eine schematische Darstellung der ersten Variante einer Längenmessvorrichtung,

Fig. 2a    eine Skizze der geometrischen Zusammenhänge bei einer zweiten Variante einer Längenmessvorrichtung,

Fig. 2b    eine schematische Darstellung der zweiten Variante einer Längenmessvorrichtung,

Fig. 3a    eine Skizze der geometrischen Zusammenhänge bei einer dritten Variante einer Längenmessvorrichtung,

Fig. 3b    eine schematische Darstellung der dritten Variante einer Längenmessvorrichtung,

Fig. 4a    eine Skizze der geometrischen Zusammenhänge bei einer vierten Variante einer Längenmessvorrichtung,

Fig. 4b    eine schematische Darstellung der vierten Variante einer Längenmessvorrichtung,

Fig. 5a    eine schematische Darstellung eines Durchmesser-Sensors an einer der vorangehenden Varianten einer Längenmessvorrichtung,

Fig. 5b-e  eine schematische Darstellung des Gravitätspendelkörpers vom Durchmesser-Sensor nach Fig. 5a, mit verschiedenen Varianten eines Ablesecodes.

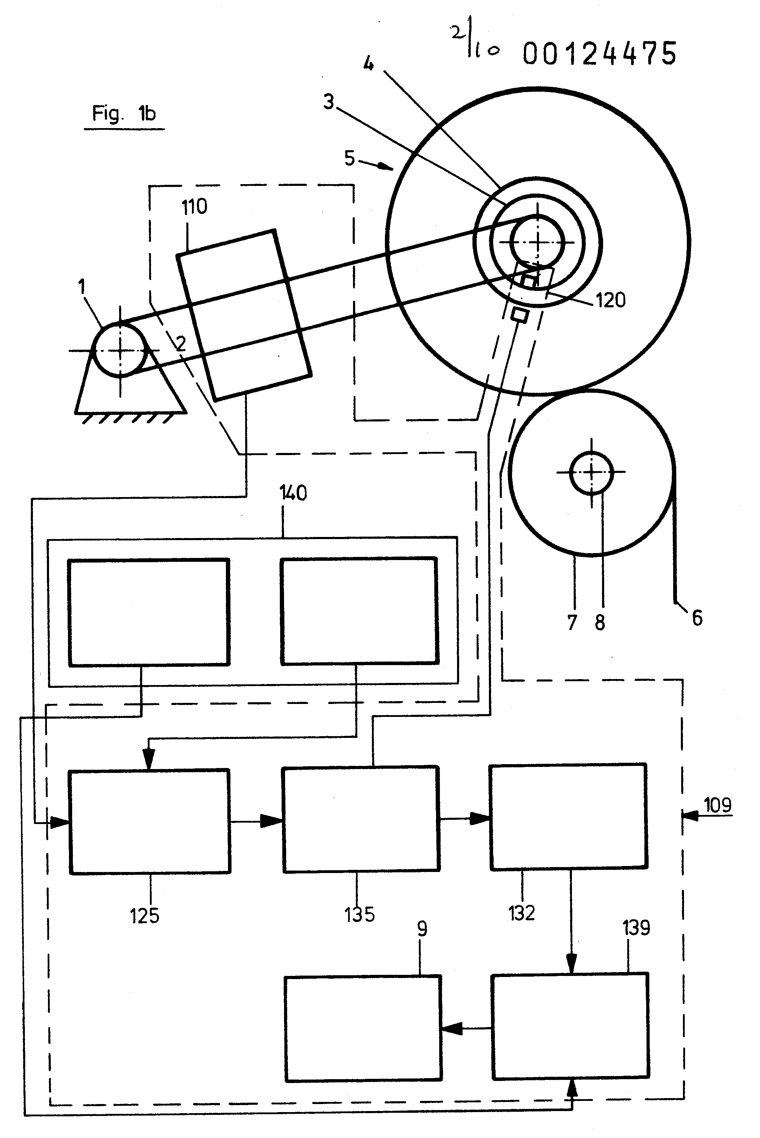

Auf einer im Rahmen einer Garnspulmaschine (Fig. 1b nicht dargestellt) gelagerten Achse 1 ist ein Spulenträger 2 schwenkbar gelagert. Am freien Ende des Spulenträgers 2 sitzt das Spulenlager 3 der Spuleinheit, auf das eine Hülse 4 als Träger des Garnwickels aufgeschoben ist, welche zusammen die Kreuzspule 5 bilden. Diese wird durch Reibungsschluss von einer den Faden 6 führenden Nutentrommel 7 angetrieben. Alle Nutentrommeln 7 der Spulmaschine mit mehreren Spulstationen sitzen auf derselben Antriebswelle 8.

Infolge dieser Anordnung wird der Spulenträger 2

aus einer ersten Stellung zu Beginn des Wickelvorgangs durch den anwachsenden Durchmesser der Kreuzspule 5 nach oben geschwenkt, bis er bei voller Kreuzspule 5 seine zweite Stellung erreicht. Am Spulenträger 2 ist ein Durchmesser-Sensor 110 einer Messeinrichtung 109, der als Gravitationspendelsensor ausgebildet ist, befestigt. Der Gravitationspendelsensor 110 weist einen Pendelrahmen 111 und einen in diesem an einem Spannband oder -faden 112 aufgehängten Gravitationspendelkörper 113 auf. Am Pendelrahmen 111 und am Gravitationspendelköprer 113 sitzen einander entsprechende Bauteile einer Winkel-Ableseeinrichtung 114. Diese enthält einen auf dem Gravitationspendelkörper 113 angeordneten Code 115, eine Lichtquelle 117 zur Beleuchtung des Codes 115 und eine auf dem Pendelrahmen 111 sitzende Sensoreinrichtung 116, zur Abtastung des Codes, um ein der Winkelstellung proportionales Signal zu erzeugen. Der Gravitationspendelgeber 110 kann eine Dämpfungseinrichtung 118 enthalten, welche Magnete einer auf den Gravitationspendelkörper 113 wirkenden Wirbelstrombremse sein können.

Diese Messeinrichtung 109 weist ausserdem einen im allgemeinen mit dem Spulenlager 3 der Kreuzspule 5 zusammenwirkenden Umdrehungssensor 120 auf, welcher bei jeder Umdrehung der Kreuzspule 5 zur Zählung der Garnwindungen ein Signal abgibt. Dieses wird einem Und-Glied 135 an einem Eingang zugeführt, welches mit seinem anderen Eingang an einem Multiplizierglied 125 liegt. Die Eingänge desselben sind mit dem Gravitationspendel-Sensor 110 bzw. mit einer Konstanten-Station 140 verbunden. Von dieser wird eine dem Steigungswinkel $\alpha$ der Nutentrommel 7 entsprechende Konstante dem Multiplizierglied 125 der Messeinrichtung 109 eingegeben. Am Ausgang des Und-Gliedes 135 liegt ein Summierglied 132, welches die momentane Länge des auf der Kreuzspule 5 aufgewickelten Fadens laufend ermittelt. An dieses ist ein Komprator 139 angeschlossen, der die momentane Fadenlänge mit einer diesem von der Konstanten-station 140 eingegebenen Fadensollänge vergleicht. Ist diese erreicht, gibt der Komparator 139 ein Signal an eine an ihn angeschlossene Steuereinrichtung 9 ab, welches die Spulmaschine abstellen oder einen vollautomatischen Spulenwechsel mit allen Nebenfunktionen einleiten kann.

Die Messeinrichtung 109 bestimmt ohne Zwischenschaltung mechanisches Spiel aufweisender Uebertragungsmittel laufend den Durchmesser $D_K$ der Kreuzspule 5 und die zu jeder Umdrehung gehörende Fadenlänge exakt. Der Pendelrahmen 111 des Gravitationspendelsensors 110 folgt exakt den der Durchmesserzunahme entsprechenden Bewegungen der Kreuzspule 5 und der Gravitationspendelkörper 113 bleibt, insbesondere durch die Dämpfungseinrichtung 118, immer in der vertikalen Stellung. Mit den Impulsen des Umdrehungssensors 120 ermittelt das Summierglied 132 die momentane Fadengesamtlänge. Somit wird schon durch die Durchmesserbestimmung der Kreuzspule 5 eine wesentliche Genauigkeitssteigerung der Fadenlängenmessung einerseits durch den Fortfall von mechanischen Uebertragungsgliedern oder - getrieben zwischen dem Spulenträger 2 und der Ableseeinrichtung und andererseits durch die exakte und verlustkräftefreie Vertikalstellung des Bezugsgliedes und dem Schwenkglied der Ableseeinrichtung erreicht.

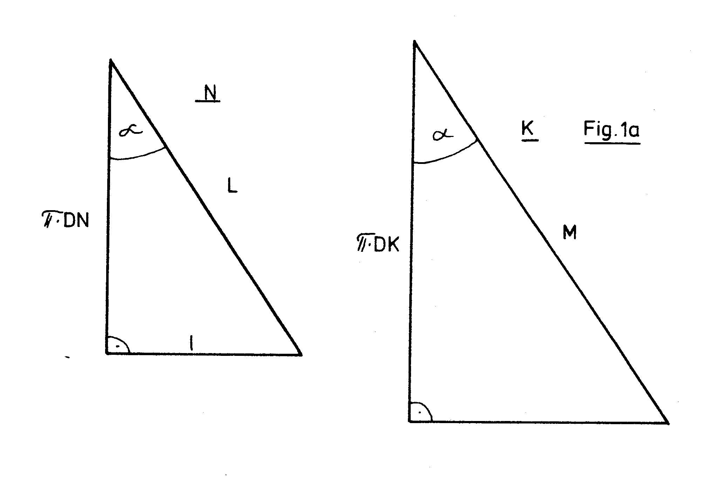

Die Fig. 1a zeigt die elementaren geometrischen Verhältnisse für diese Variante einer Längenmessvorrichtung. Dabei gilt

$$L = \frac{\pi \cdot D_N}{\cos \alpha}$$

$$\alpha = \text{arc sin } \frac{L}{\pi \cdot D_N}$$

$$M_i = \frac{\pi \cdot D_{Ki}}{\cos \alpha}$$

$$M_{tot} = \sum_{i=1}^{n} M_i = \frac{\pi}{\cos \alpha} \sum_{i=1}^{n} D_{Ki}$$

i ... Anzahl der Umdrehungen der Kreuzspule

$D_N$ ... Durchmesser der Nutentrommel

$D_{Ki}$ ... Durchmesser der Kreuzspule (i-te Umdrehung)

00124475

$\alpha$ ... Steigungswinkel des Fadens auf der Kreuzspule und der Nutentrommel

$D_K$... Durchmesser der Kreuzspule (gemessen)

$D_N$... Durchmesser der Nutentrommel

L ... Länge des aufgewickelten Fadens für eine Nutentrommelumdrehung

M... Länge des aufgewickelten Fadens für eine Kreuzspulenumdrehung

$l$... Breite der Fadenverlegung auf der Kreuzspule für eine Nutentrommelumdrehung

$n$ ... Anzahl der Windungen auf der Kreuzspule

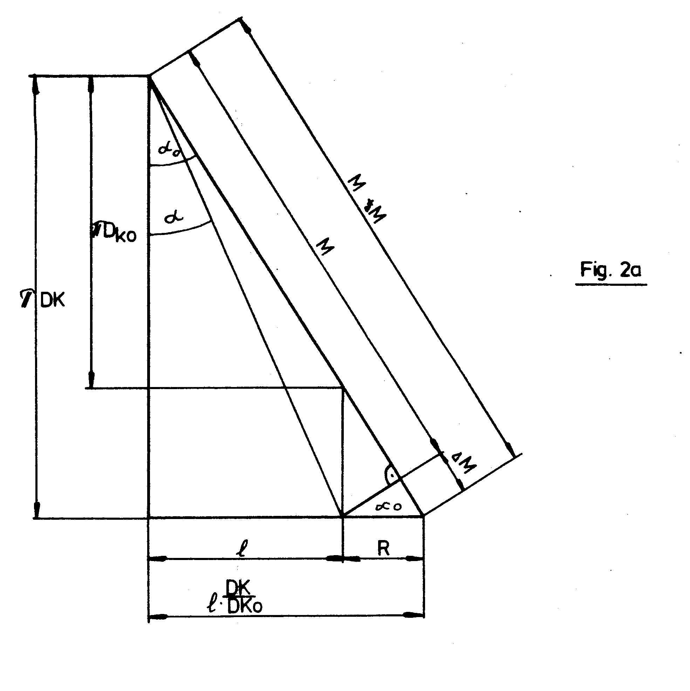

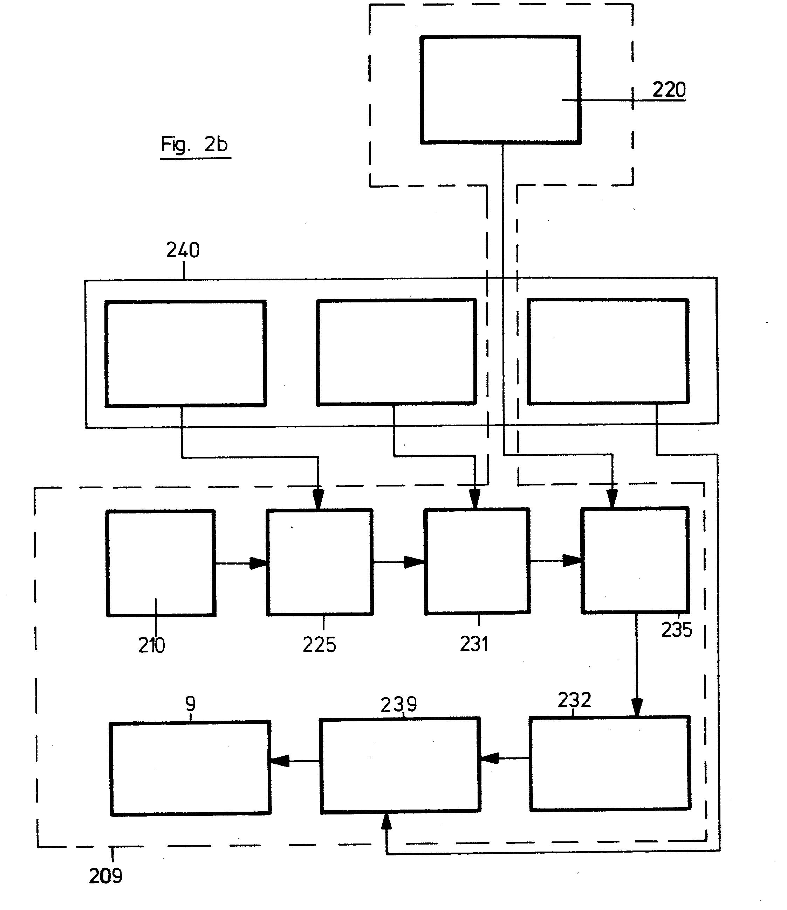

Bei einer anderen Variante einer Längenmessvorrichtung (Fig. 2b) weist die Messeinrichtung einen Gravitationspendel-Sensor 210 zur Abtastung des Durchmessers $D_K$ der Kreuzspule 5 auf, welcher an einen Eingang eines Multipliziergliedes 225 angeschlossen ist. An seinem anderen Eingang liegt eine Konstantenstation 240 zur Eingabe einer Grösse (K3 - K4) der Spulvorrichtung. Mit dem Ausgang des Multipliziergliedes 225 ist ein Eingang eines Addiergliedes 231 verbunden, dessen anderer Eingang ebenfalls mit der Konstantenstation 240 zur Eingabe einer bestimmbaren Maschinenkonstanten K5 verbunden ist. Dem Addierglied 231 folgt in der Schaltung ein Und-Glied 235, das zusätzlich am Umdrehungssensor 220 der Kreuzspule 5 liegt. Ein Summierglied 232 erhält das Ausgangssignal des Und-Gliedes 235 und ermittelt die momentane Gesamtlänge des Fadens. Das dieser entsprechende Signal erhält ein Komparator 239, welcher mit einem zweiten Eingang an die Konstantenstation 240 angeschlossen ist und vergleicht die momentane Fadengesamtlänge mit der Fadensolllänge. Bei Uebereinstimmung gibt er ein Signal an eine Steuereinrichtung 9 zur Abschaltung der Spulmaschine oder zur Einleitung eines vollautomatischen Spulenwechsels odgl. ab.

DieserAusführungsform liegen die geometrischen Verhältnisse gemäss der Fig. 2a zugrunde.

Aus dieser ergibt sich in elementarer Rechnung:

$$Z = l \cdot \left( \frac{D_{Ki}}{D_{Ko}} - 1 \right)$$

$$M_i = \frac{\pi \cdot D_{Ki}}{\cos \alpha}$$

$$M_i + \Delta M_i = \frac{\pi \cdot D_{Ki}}{\cos \alpha_o}$$

$$\Delta M_i = l \cdot \left( \frac{D_{Ki}}{D_{Ko}} - 1 \right) \cdot \sin \alpha_o \qquad \text{(als erlaubte Näherung)}$$

$$M_i = \frac{\pi \cdot D_{Ki}}{\cos \alpha_o} - l \cdot \left( \frac{D_{Ki}}{D_{Ko}} - 1 \right) \cdot \sin \alpha$$

und mit den Substitutionen

$$K_3 = \frac{\pi}{\cos \alpha_o}$$

$$K_4 = \frac{l}{D_{Ko}} \cdot \sin \alpha_o$$

$$K_5 = l \cdot \sin \alpha_o$$

ist

$$M_{tot} = \sum_i M_i = \sum_i \left[ D_{Ki} (K_3 - K_4) + K_5 \right]$$

00124475

$D_K$ ... Kreuzspulendurchmesser

$D_{K0}$ ... Kreuzspulendurchmesser bei Spulbeginn

$\alpha_0$ ... Steigungswinkel des Fadens bei Spulbeginn

$\alpha$ ... Steigungswinkel des Fadens

R ... Verkürzung der Fadenverlegungsbreite

$M_i$ ... Fadenlänge bei der i-ten Kreuzspulenumdrehung

$\Delta M_i$ ... Verkürzung der Fadenlänge bei der i-ten Kreuzspulenumdrehung infolge kleiner werdendem

i ... Kreuzspulenumdrehungen 1 ... m

Eine solche Variante einer Längenmessvorrichtung eignet sich für die Verwendung an einer Spulmaschine, bei der die Fadenverlegung mit dem Kreuzspulenantrieb zwangsläufig gekoppelt ist und in einem festen, obschon einstellbaren, Verhältnis steht. Dadurch verändert sich der Steigungswinkel $\alpha$ des Fadens mit zunehmendem Spulendurchmesser in Abhängigkeit von der Spulmaschine. (Im einfachsten Fall bleibt l = const für zunehmenden Kreuzspulendurchmesser.)

Eine weitere Verbesserung der Fadenlängenmessung wird durch eine andere Variante einer Längenmessvorrichtung (Fig. 3b) erreicht. Bei dieser wird von einer Korrektur-Messeinrichtung 330 der an sich variierende Schlupf beim Reibantrieb der Kreuzspule 5 durch die Nutentrommel 7 als angenäherter Mittelwert berücksichtigt.

Mit einem Gravitationspendel-Sensor 310 für den Durchmesser der Kreuzspule 5 wird deren Durchmesser als Signal an ein erstes Multipliczierglied 325 gelegt. Der zweite Eingang dieses Multipliczergliedes 325 empfängt das Signal für die Umdrehungszahl der Kreuzspule 5 von einem Kreuzspulen-Drehzahlmesser 321, der an einen Umdrehungssensor 320 der Kreuzspule 5 angeschlossen ist. Ein Divisionsglied 330 liegt einerseits am ersten Multipliczierglied 325 und andererseits an einem zweiten Multipliczierglied 326, das Signale von einem Nuten- trommel-Drehzahlmesser 323, mit einem Umdrehungssensor 322 und der Konstantenstation 340 für den Nutentrommeldurchmesser $D_N$, zugeleitet erhält. Der Ausgang des Divisionsgliedes 330 ist mit einem ersten Subtrahierglied 333 und dieses mit einem dritten Multiplizierglied 327 verbunden. Ein zweiter Eingang desselben liegt an der Konstantenstation 340 zur Eingabe der Konstanten K1. Ausgangsseitig ist ein zweites Subtrahierglied 334 angeschlossen, das Signale für die Konstante K2 von der Konstantenstation 340 erhält und seinerseits Signale an ein Und-Glied 335 abgibt. Dieses ist mit seinem anderen Eingang an den Umdrehungssensor 322 der Nutentrommel 7 angeschlossen. Am Ausgang des Und-Gliedes 335 liegt ein Summierglied 332 zur Bildung der momentanen Totalsumme der Fadenlänge. Das dieser entsprechende Signal wird einem Komparator 339 zugeführt, der an der Konstantenstation 340 zur Eingabe der Fadensolllänge liegt. Bei Erreichen der Fadensolllänge gibt der Komparator ein Signal an eine Steuereinrichtung 9 zur Steuerung der Maschine für einen manuellen oder vollautomatischen Spulenwechsel ab.

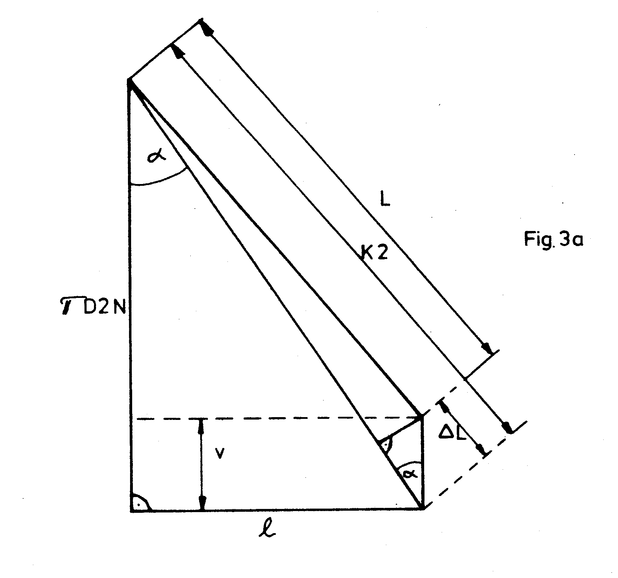

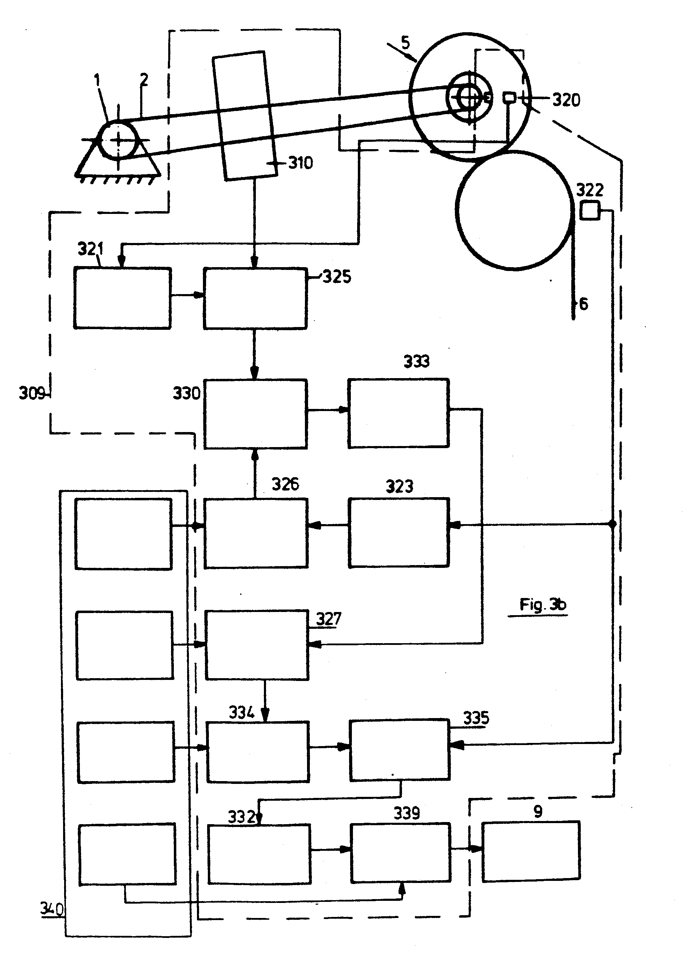

Die geometrischen Verhältnisse für diese Form einer Längenmessvorrichtung sind in Fig. 3a dargestellt.

Aus dieser folgt nach der Definition des Schlupfes

$$S_i = 1 - \frac{n_{Ki} \cdot D_{Ki}}{n_N \cdot D_N} \qquad (S = 0 \text{ für } n_K D_K = n_N D_N)$$

$$V_i = S_i \cdot \pi D_N$$

$$\Delta L = S_i \, \pi \, D_N \cdot \cos \alpha \qquad (\text{diese Näherung ist in der Praxis zulässig})$$

$$K_1 = \pi \cdot D_N \cdot \cos \alpha = konst$$

$$\Delta L_i = K_1 \cdot S_i$$

$$L_i = K_2 - K_1 \cdot S_i$$

$$L_{tot} = \sum_{i=1}^{m} L_i = m \cdot K_2 - K_1 \sum_{i=1}^{m} S_i$$

- 9 -                                          00124475

$s_i$ ... Schlupf für die i-te Kreuzspulen-Drehzahl $n_{Ki}$ und den i-ten Kreuzspulendurchmesser $D_{Ki}$ zwischen Nutentrommel und Kreuzspule

$n_{Ki}$ ... Kreuzspulendrehzahl, zu $D_{Ki}$ gehörend

$D_{Ki}$ ... i-ter Kreuzspulendurchmesser

$n_N$ ... Nutentrommeldrehzahl

$D_N$ ... Nutentrommeldrehzahl

$\alpha$ ... Steigungswinkel des Fadens auf der Nutentrommel

$n_{Ntot}$... Anzahl totale Umdrehungen der Nutentrommel

$K_2$ ... Länge des aufgewickelten Fadenstückes pro Nutentrommelumdrehung ohne Schlupf (Konstante)

$K_1$ ... $\pi \cdot D_N \cdot \cos \alpha$ = Konstante

$V$ ... scheinbare Verkleinerung des Nutentrommelumfanges durch den Schlupf

$\Delta L$ ... Verkürzung des auf der Kreuzspule aufgewickelten Fadenstückes durch den Schlupf

$i$ ... Anzahl der Nutentrommelumdrehungen

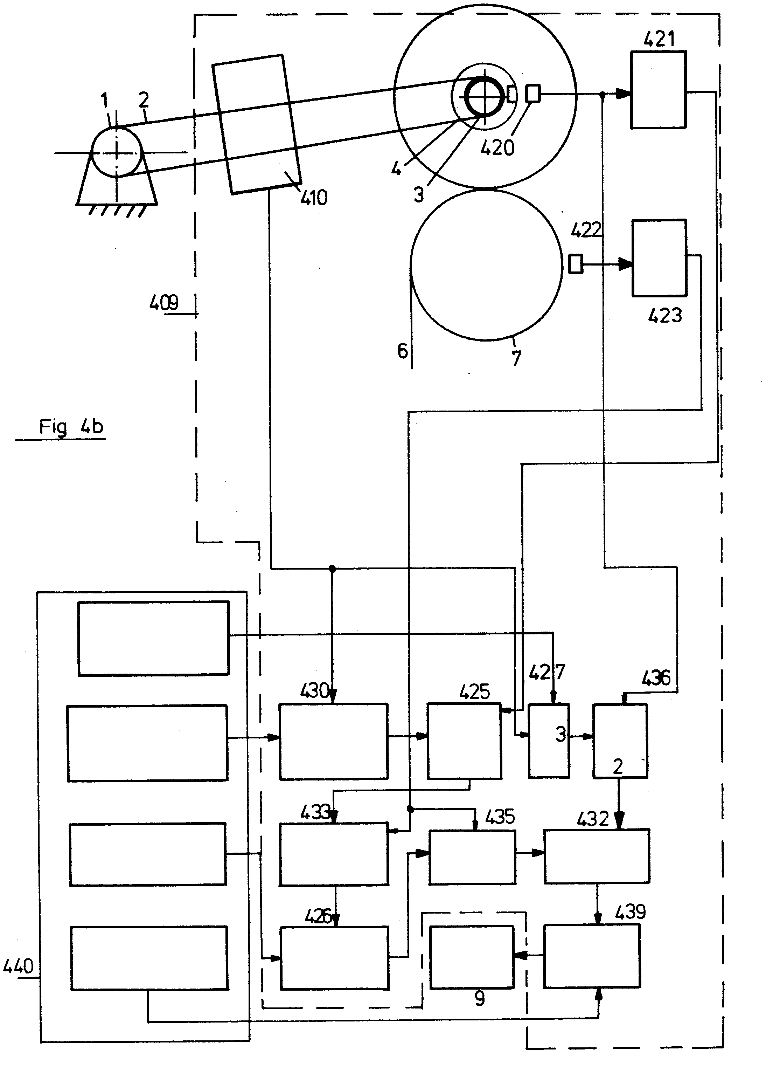

Bei einer weiteren Variante einer Längenmessvorrichtung (Fig. 4b) ist ein Durchmesser-Sensor einer Korrekturmesseinrichtung 409, welcher vorzugsweise als ein Gravitationspendelsensor 410 ausgebildet ist zur Abtastung des Kreuzspulendurchmessers $D_K$ an einen Eingang eines Divisionsgliedes 430 angeschlossen, an dessen anderem Eingang eine Konstantenstation 440 zur Eingabe des Nutentrommeldurchmesser $D_N$ liegt. Das Signal des Divisionsgliedes gelangt zu einem ersten Multiplizierglied 425, welches auch noch ein Signal vom Kreuzspulendrehzahlmesser 421 bezieht, der mit einem Umdrehungssensor 420 an der Kreuzspule 5 verbunden ist. Das erste Multiplizierglied 425 speist ein Subtrahierglied 433, welchem noch von einem Nutentrommeldrehzahlmesser 423, der an einem Umdrehungssensor 422 der Nutentrommel liegt, Signale zugeführt werden. An das Subtrahierglied 433 ist ein zweites Multiplizierglied 426 angeschlossen, in das Werte (1.sin $\alpha$) von der Konstantenstation 440 eingespeist werden. Am Ausgang des zweiten Multipliziergliedes 426 liegt ein erstes Und- Glied 435, das auch mit dem Nutentrommeldrehzahlmesser 423 oder einem Umdrehungszähler der Nutentrommel verbunden ist. Das erste Und-Glied 435 ist an einen Eingang eines Summiergliedes 432 angeschlossen, dessen anderer Eingang von einem zweiten Und-Glied 436 gespeist wird, welches einerseits am Umdrehungssensor 420 der Kreuzspule 5 und andererseits an einem dirtten Multiplikationsglied 427 liegt. Dieses ist an den Durchmesser-Sensor 410 und an die Konstantenstation 440 zur Eingabe des Wertes für $\frac{\pi}{\cos \alpha}$ angeschlossen. Das Summierglied 432 bildet die momentane Gesamt-Fadenlänge und speist einen Komparator 439, der die Fadensolllänge von der Konstantenstation 440 erhält und diese beiden Werte vergleicht. Bei Gleichheit gibt der Komparator ein Signal an eine Steuereinrichtung 9 ab, welche die Maschine steuert. Zum Beispiel kann die Maschine oder ein Teil von ihr nur abgestellt werden oder es ist möglich, den Ablauf weiterer Maschinenfunktionen einzuleiten.

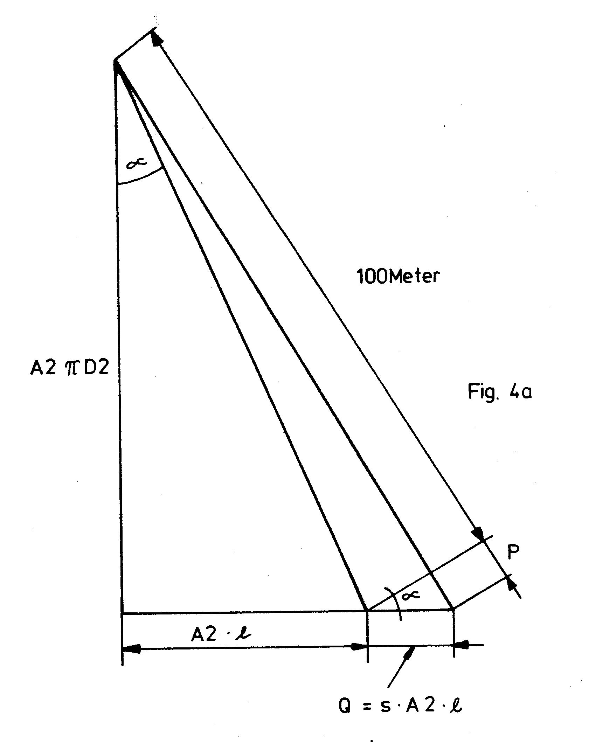

Die geometrischen Verhältnisse zu dieser Ausführungsform einer Längenmessvorrichtung sind in Fig. 4a dargestellt.

$Q$     ... Vergrösserung der Breite der Fadenverlegung durch den Schlupf

$A_K$     ... Anzahl Kreuzspulenumdrehungen pro 100 Meter

$A_N$     ... Anzahl Nutentrommelumdrehungen pro 100 Meter ohne Schlupf

$A_{NSj}$     ... Anzahl Nutentrommelumdrehungen pro 100 Meter mit Schlupf

$A_N \cdot 1$ ... totale Breite der Fadenverlegung pro 100 Meter Faden

$p$     ... Verlängerung des Fadens durch den Schlupf pro 100 Meter

- 11 -

j ...  Anzahl Gruppen von Umdrehungen der Kreuzspule
pro 100 Meter aufgespulten Faden, die bis zur
aufgespulten Fadensolllänge erhalten wird

Definiert man den Schlupf durch

$$S_j = \frac{ANS_j}{AN} - 1$$

und berücksichtigt, dass der Steigungswinkel auf der Kreuzspule durch den Schlupf einen grösseren Wert als auf der
Nutentrommel ($\alpha$) aufweist, so ergibt sich

$$A = S_j \cdot AN \cdot 1$$

Mit der in der Praxis zulässigen Näherung kann man schreiben

$$P_j = Q \cdot \sin \alpha = S_j \cdot AN \cdot 1 \cdot \sin \alpha$$

Mit $A_N = \frac{D_K}{D_N} \cdot AK$

ist $P_j = (A_{NS} - A_K \frac{D_K}{D_N}) \cdot 1 \cdot \sin \alpha$

In für die Praxis genügender Näherung ist $1 \cdot \sin \alpha = $ Konst.

Somit gibt sich für die Gesamtlänge als für die Praxis genügende Näherung

$$L_{tot} = \sum_j L_{Sj} = \frac{\pi}{\cos \alpha} \sum_j D_{Kj} + \sum_j P_{Kj}$$

Anstelle von Drehzahlmessern können bei diesen Varianten auch
Umdrehungszähler eingesetzt werden, ohne dass die Funktion geändert würde.

Mit den Längenmessvorrichtungen, welche den Schlupf in
dieser Weise berücksichtigen, haben sich bei Versuchen in
der Praxis wesentlich bessere Genauigkeiten ergeben, als sie
bisher ermittelt wurden.

00124475

Diese Längenmessvorrichtung kann für alle fadenartigen Gebilde verwendet werden. Insbesondere eignet sie sich für Textil-, Kunststoff-, Metall-, Mineralfaserfäden usw.

82 004 / P.
25.03.83 RT/m ab

00124475

Gebrüder Loepfe AG
Kastellstrasse 10
CH-8623 Wetzikon-Kempten


Längenmessvorrichtung für einen Faden

PATENTANSPRUECHE

1. Längenmessvorrichtung für einen auf einer Kreuzspule aufgespulten Faden, insbesondere Textilfaden, wobei an der Kreuzspule der Durchmesser mit einem Durchmesser-Sensor und jede Umdrehung mit einem Drehzahl-Sensor abgetastet wird, dadurch gekennzeichnet, dass *eine* Messeinrichtung (109, 209, 309, 409) einen Durchmesser-Sensor (110, 210, 310, 410) und wenigstens einen Umdrehungssensor (120, 220, 320, 420; 122, 222, 322, 422) aufweist, und *dass* jene mit einer Konstantenstation (140, 240, 340, 440), zur Aufnahme und Weiterleitung von spezifischen Grössen der Fadenspulvorrichtung und des Produktes, und mit einer Steuereinrichtung (9), zur Steuerung der Fadenspulvorrichtung oder einer anderen Maschine, verbunden ist und die Signale des Durchmessersensors (110, 210, 310, 410) und wenigstens eines Umdrehungssensors (120, ..., 420; 122, ..., 422), sowie die der Konstantenstation *(gemäss der geometrischen* und kinematischen Anordnung von Kreuzspule und Fadenführung zu einem Ausgangssignal verarbeitet, das an der Steuereinrichtung liegt.

2. Längenmessvorrichtung nach Anspruch 1, dadurch gekennzeichnet, dass die Messeinrichtung (109) ein Multiplizierglied (125) aufweist, dessen einer Eingang mit dem Durchmessersensor (110) und dessen anderer Eingang mit der Konstantenstation (140), zur Eingabe des Wertes $\frac{T}{\cos \alpha}$ , und dessen Ausgang mit einem Und-Glied (135) verbunden ist, wobei der andere Eingang des Und-Gliedes (135) am Umdrehungssensor (120) der Kreuzspule (5) und sein Ausgang mit einem Summierglied (132) verbunden ist, das die Länge des auf der Kreuzspule (5) aufgewickelten Fadens (6) fortlaufend ermittelt, und dass am Ausgang des Summiergliedes (132) ein Komparator (139) zum Vergleich der momentanen Fadenlänge mit einer an der Konstantenstation (140) einstellbaren Fadensolllänge angeschlossen ist, der seine Signale an eine Steuereinrichtung (9) zur Steuerung der Fadenspulvorrichtung oder einer Maschine abgibt (Fig. 1b).

3. Längenmessvorrichtung nach Anspruch 1, dadurch gekennzeichnet, dass die Messeinrichtung (209) ein Multiplizierglied (225) aufweist, dessen erster Eingang am Durchmesser-Sensor (210) und dessen zweiter Eingang an der Konstantenstation (240) zur Aufnahme des Wertes für den Kreuzspulenhülsendurchmesser ($D_{ke}$) bzw. der Konstanten (K3-K4) liegt, dass am Ausgang ein Addierglied (231) angeschlossen ist, welches mit der Konstantenstation (240) zur Eingabe einer Konstanten (K5) und ausgangsseitig mit einem Und-Glied (235) verbunden ist, wobei ein zweiter Eingang des Und-Gliedes (235) am Umdrehungssensor (220) der Kreuzspule (5) liegt, dass das Und-Glied (235) an ein Summierglied (232) angeschlossen ist, welches die momentane Gesamtfadenlänge bildet und diese als Signal an einen Komparator (239) leitet, der mit einem zweiten Eingang an der Konstantenstation (240) zur Eingabe der Fadensolllänge liegt und bei Erreichen derselben ein Signal an die ausgangsseitig angeschlossene Steuereinrichtung (9) für eine Maschine abgibt (Fig. 2b).

4. Längenmessvorrichtung nach Anspruch 1, dadurch gekennzeichnet, dass die Messeinrichtung eine Korrektur-Messeinrichtung (309, 409) zur Korrektur des Schlupfes zwischen der Kreuzspule (5) und der Nutentrommel (7), welche die Kreuzspule (5) antreibt und den Faden (6) führt, ist.

5. Längenmessvorrichtung nach Anspruch 4, dadurch gekennzeichnet, dass die Korrektur-Messeinrichtung (309) ein erstes Multiplizierglied (325) aufweist, dessen einer Eingang am Durchmesser-Sensor (310) und dessen zweiter Eingang am Kreuzspulen-Drehzahlmesser (321), der mit einem Umdrehungssensor (320) der Kreuzspule (5) verbunden ist, und dessen Ausgang an einem Divisionsglied (330) liegt, dessen anderer Eingang vom zweiten Multiplizierglied (326) gespeist wird, das mit seinem einen Eingang an einem Nutentrommel-Drehzahlmesser (323), der mit einem Umdrehungssensor (322) der Nutentrommel (7) verbunden ist, und mit seinem anderen Eingang an der Konstantenstation (340), zur Eingabe für den Nutentrommeldurchmesser ($D_N$), liegt, dass der Ausgang des Divisionsgliedes (330) an einem ersten Subtrahierglied (333) angeschlossen ist, dessen Ausgang an einem dritten Multiplizierglied (327) liegt, welches mit seinem anderen Eingang von der Konstantenstation (340) mit einem Signal des Wertes für K1 gespeist wird und sein Signal an ein zweites Subtrahierglied (334) abgibt, wobei dieses auch an der Konstantenstation (340) zur Eingabe des Wertes für $K_2$ liegt und mit einem Und-Glied (335) verbunden ist, das am Umdrehungssensor (322) der Nutentrommel (7) liegt und bei einem Umdrehungssignal einen im zweiten Subtrahierglied (334) gebildeten Wert an ein Summierglied (332) weitergibt, das an einen Komparator (339) angeschlossen ist, der an der Konstantenstation (340) zur Eingabe der Fadensolllänge liegt und sein Steuersignal an eine Steuervorrichtung (9) zur Steuerung einer Maschine in Abhängigkeit vom Vergleichsergebnis abgibt (Fig. 3b).

6. Längenmessvorrichtung nach Anspruch 4, dadurch gekennzeichnet, dass die Korrektur-Messeinrichtung (409) ein erstes Multiplizierglied (425) mit einem an einem Divisionsglied (430) liegenden Eingang, das mit einer Konstantenstation (440) zur Eingabe des Nutentrommeldurchmessers ($D_N$) und mit dem Durchmesser-Sensor (410) verbunden ist, und dass das Multiplizierglied (425) einen an einem

Kreuzspulen-Drehzahlmesser (421) der an den Umdrehungssensor (420) der Kreuzspule (5) angeschlossen ist, liegenden Eingang aufweist, wobei es sein Signal an ein Subtrahierglied (433) abgibt, welches ausserdem mit einem
Nutentrommel-Drehzahlmesser (423) verbunden ist, wobei
das Subtrahierglied (433) an einem zweiten Multiplizierglied (426) liegt, welches zur Eingabe einer vom Steigungswinkel ($\alpha$) des Fadens (6) abhängigen Konstanten an
die Konstantenstation (440) und mit seinem Ausgang an ein
erstes Und-Glied (435) angeschlossen ist, welches auch am
Nutentrommel-Drehzahlmesser (423) liegt und sein Signal
an ein Summierglied (432) abgibt, das an einem zweiten
Und-Glied (436) liegt und so in Abhängigkeit von der Umdrehungszahl der Kreuzspule (5) zusammen mit dem Signal
eines am zweiten Und-Glied (436) liegenden dritten Multipliziergliedes (427), das seinerseits an der Konstantenstation (440) und am Durchmesser-Sensor (410) liegt, die
Fadengesamtlänge ermittelt und an einen Komparator (439)
als Signal abgibt, der sie mit der von der Konstantenstation (440) eingespeisten Fadensolllänge vergleicht und
ein diesem Vergleichsresultat entsprechendes Signal an
eine Steuereinrichtung (9) einer Maschine abgibt (Fig. 4b).

7. Längenmessvorrichtung nach einem der Ansprüche 1 - 6, dadurch gekennzeichnet, dass der Durchmesser-Sensor (110,
..., 410) ein mit dem Spulenträger (2) starr verbindbarer
Gravitationspendel-Sensor (110, ..., 410) ist.

8. Längenmessvorrichtung nach Anspruch 7, dadurch gekennzeichnet, dass der Gravitationspendel-Sensor (110, ...,
410) einen Pendelrahmen (111, ..., 411) und einen in diesem
aufgehängten Gravitationspendelkörper (113, ..., 413) aufweist, wobei auf diesem und dem Pendelrahmen (111, ...,
411) je einander entsprechende Bauteile einer Ableseeinrichtung zur Abgabe wenigstens eines dem Winkel zwischen Gravitationspendelkörper (113, ..., 413) und Pendelrahmen (111, ..., 411) entsprechenden Signals angeordnet sind.

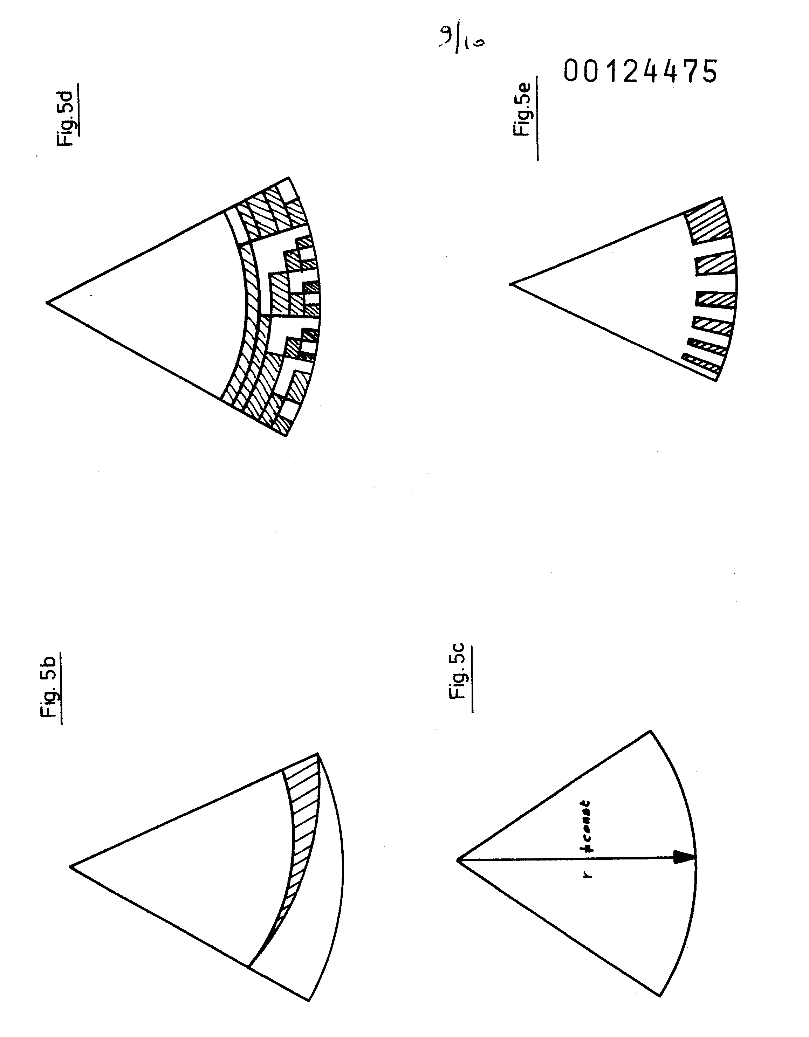

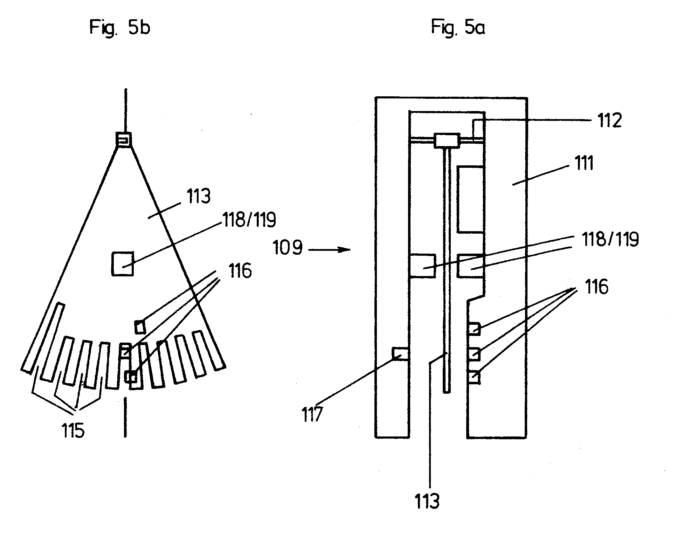

9. Längenmessvorrichtung nach Anspruch 8, dadurch gekennzeichnet, dass die Ableseeinrichtung vorzugsweise einen auf dem Gravitationspendelkörper (113, ..., 413) angeordneten Code (115, ..., 415), eine diesen beleuchtende Lichtquelle (117, ..., 417) sowie eine den Code (115, ..., 415) abtastende Sensoreinrichtung (116, ..., 416) aufweist (Fig. 5a, b).

10. Längenmessvorrichtung nach Anspruch 9, dadurch gekennzeichnet, dass der Code (115, ..., 415) ein kontinuierlicher Code, insbesondere ein aus zwei spiralenförmigen Kurven zusammengesetzter Bereich oder eine kurvenförmig verlaufende Kante des Gravitationspendelkörpers (113, ..., 413), ist (Fig. 6a, b).

11. Längenmessvorrichtung nach Anspruch 9, dadurch gekennzeichnet, dass der Code (115, ..., 415) ein ein- oder mehrspuriger diskontinuierlicher Code, insbesondere ein Streifencode, ist (Fig. 6c, d).

12. Längenmessvorrichtung nach Anspruch 9, dadurch gekennzeichnet, dass die den Code (115, ..., 415) abtastende Sensoreinrichtung ein lichtempfindlicher Array ist, der je nach Anordnung und Verlauf des Codes im wesentlichen tangential oder radial zur Pendelbahn liegt.

13. Längenmessvorrichtung nach Anspruch 9, dadurch gekennzeichnet, dass die Ableseeinrichtung Mittel zur Unterdrückung von Messwertschwankungen zufolge eines unrunden Laufes der Kreuzspule (5) aufweist.

14. Längenmessvorrichtung nach Anspruch 13, dadurch gekennzeichnet, dass die Mittel zur Unterdrückung von Messwertschwankungen eine besondere Codeform und eine entsprechende Sensoreinrichtung zur Ablesung dieses Codes sind.

15. Längenmessvorrichtung nach Anspruch 13, dadurch gekennzeichnet, dass das Mittel zur Unterdrückung von Messwertschwankungen eine elektronische Unterdrückerschaltung ist.

16. Längenmessvorrichtung nach Anspruch 13, dadurch gekennzeichnet, dass das Mittel zur Unterdrückung von Messwertschwankungen eine Dämpfungseinrichtung (218) ist.

17. Längenmessvorrichtung nach Anspruch 7, dadurch gekennzeichnet, dass der Gravitationspendelkörper (113, ..., 413) mit einem Spannband oder -faden (112, ..., 412) im Pendelrahmen (111, ..., 411) aufgehängt ist.

18. Längenmessvorrichtung nach Anspruch 16, dadurch gekennzeichnet, dass die Dämpfungseinrichtung (218) wenigstens einen als Wirbelstrombremse auf den Gravitationspendelkörper wirkenden Magnet (119, ..., 419) aufweist.

82 004 /P
25.03.83 /RT/mab

**N**

α

L

π·DN

l

**K**     Fig.1a

α

π·DK

M

Fig. 1b

00124475

Fig. 2a

Fig. 2b

Fig. 3a

Fig. 3b

6/10

00124475

100Meter

Fig. 4a

$A2\,\pi\,D2$

P

$A2\cdot\ell$

$Q = s\cdot A2\cdot\ell$

00124475

Fig 4b

Fig. 5b

Fig.5d

Fig. 5c

Fig.5e

$r \neq const$

0012 4475

Fig. 5b

Fig. 5a

113

118/119

116

115

109 →

112

111

118/119

116

117

113